# FASCICULE DE BREVET EUROPEEN

(11) **EP 0 990 562 B1**
(45) Date de publication et mention de la délivrance du brevet: **26.02.2003**
(21) Numéro de dépôt: 99203192.2
(22) Date de dépôt: 30.09.1999
(51) Int. Cl.: B60R 13/10

(54) **Dispositif de fixation amovible d'une plaque sur un support, support adapté, et procédé de mise en oeuvre s'y rapportant**
Vorrichtung zum lösbaren Befestigen von einer Platte auf einer Unterlage, Unterlagenteil und diesbezügliches Verfahren
Device for the releasable fixing of a plate to a support, supporting means and method therefor

(30) Priorité: 30.09.1998 FR 9812201
(43) Date de publication de la demande: 05.04.2000
(73) Titulaire: Laplanche, Joel, 91330 Yerres (FR); Leroy, Philippe, 91330 Yerres (FR)
(72) Inventeur: Laplanche, Joel, 91330 Yerres (FR); Leroy, Philippe, 91330 Yerres (FR)
(74) Mandataire: Richebourg, Michel François

(56) Documents cités:
- DE-A- 2 306 782
- DE-A- 2 407 076
- DE-A- 2 549 660
- DE-A- 3 641 034
- DE-A- 19 536 854
- US-A- 1 778 660
- US-A- 4 918 792
- PATENT ABSTRACTS OF JAPAN vol. 11, no. 71 (M-567), 4 mars 1987 (1987-03-04) & JP 61 226347 A (NISSAN MOTOR CO LTD), 8 octobre 1986 (1986-10-08)

## Description

La présente invention se rapporte à un dispositif de fixation pour la fixation amovible d'une plaque d'immatriculation spécifique sur un support existant sur un véhicule, ledit support pouvant être une plaque d'immatriculation déjà présente sur le véhicule, ou un support prévu par le constructeur automobile ou un support installé par l'utilisateur.

Elle concerne également un support spécifique prévu pour recevoir ledit dispositif de fixation.

Elle concerne encore l'ensemble constitué par le dispositif de fixation et son support spécifique.

Elle concerne enfin un procédé de mise en oeuvre dudit dispositif et/ou dudit support.

Pour clarifier la description, on entend par plaque d'immatriculation spécifique une plaque ayant un usage temporaire et/ou provisoire, comme par exemple :
- les plaques d'immatriculation temporaires identifiant un professionnel de l'automobile, qui utilise le véhicule d'un client, par exemple pour faire des essais sur route, dites plaques d'essai ou plaques "W garage", sur lesquelles est inscrit le numéro identifiant dudit professionnel de l'automobile,
- les plaques d'immatriculation provisoires identifiant les véhicules de clients de garagistes en attente de leur immatriculation définitive, dites plaques provisoires ou plaques "WW provisoire".

Les normes de circulation routière imposent que l'immatriculation occupe des emplacements bien précis sur le véhicule, notamment pour être éclairée par les systèmes d'éclairage prévus à l'avant et/ou à l'arrière du véhicule, et pour respecter notamment une hauteur minimale par rapport au sol.

Pendant longtemps une tolérance a été accordée aux immatriculations temporaires et/ou provisoires, qui étaient le plus souvent inscrites manuellement sur une bande adhésive collée soit directement sur la carrosserie du véhicule dans le cas d'un véhicule neuf sans plaque, soit de manière à recouvrir la plaque existante dans le cas d'un véhicule déjà immatriculé.

L'immatriculation temporaire et/ou provisoire est soumise aux mêmes contraintes normatives que l'immatriculation définitive, et l'usage de plaques d'immatriculation spécifiques homologuées se généralise.

Ces plaques d'immatriculation spécifiques doivent occuper l'emplacement prévu pour l'immatriculation et doivent être faciles à retirer afin de permettre un accès aisé aux plaques déjà présentes sur le véhicule pour contrôler l'identité de celui-ci. Elles doivent également respecter des formats et des dimensions déterminés, sensiblement identiques à ceux des plaques d'immatriculation définitives.

Il existe déjà dans l'art antérieur des dispositifs de fixation d'une plaque d'immatriculation spécifique sur un véhicule aux emplacements prévus à cet effet. Ils mettent en oeuvre une fixation par rivetage, par collage, par ventouses, par aimant, par pinçage, par vissage.

La plupart d'entre eux nécessitent une préparation préalable de la plaque spécifique et/ou du support : taraudage, nettoyage des faces de contact. Ils provoquent fréquemment une altération de la plaque spécifique et/ou du support : perçage de trous pour une fixation par rivetage ou vissage, altération d'une surface étendue de la carrosserie ou du pare-choc en cas de collage de la plaque spécifique, risques d'éraflures ou de rayures de la carrosserie et/ou de la plaque existante et/ou de la plaque spécifique pour une fixation par pinçage.

Les autres dispositifs de fixation, qui utilisent notamment des aimants ou des ventouses, n'altèrent pas ou très peu la plaque spécifique et/ou le support, mais n'assurent pas une stabilité suffisante de la plaque spécifique, notamment lorsque le véhicule circule sur une chaussée irrégulière, et/ou qu'il est soumis à des vibrations.

Un dispositif de fixation d'une plaque d'immatriculation ayant les caractéristiques du préambule de la revendication 1 est décrit dans le document DE-A-2 306 782.

Le but de la présente invention est de proposer un dispositif de fixation d'une plaque d'immatriculation spécifique sur un support existant sur un véhicule ou installé par l'utilisateur ainsi qu'un support adapté, qui ne présentent pas les inconvénients des modes de fixation de l'art antérieur, et qui soient d'un coût de fabrication réduit.

Lorsque le véhicule a déjà été immatriculé, le support existant est de préférence la plaque d'immatriculation qui identifie habituellement le véhicule, que l'on appellera plaque-support pour simplifier l'exposé. Le dispositif de fixation selon l'invention est alors fixé sur ladite plaque-support, de telle manière que la plaque spécifique recouvre la plaque-support par superposition. Les deux conditions sont alors remplies : la plaque spécifique occupe l'emplacement réglementaire prévu sur le pare-chocs ou sur la carrosserie selon les modèles de véhicules, et on peut la retirer aisément pour lire l'immatriculation précédente du véhicule et identifier celui-ci.

Lorsque le véhicule est neuf et n'a jamais été immatriculé ou est dépourvu de plaque-support, le support existant peut être constitué par un support adapté comme par exemple une paire d'ergots, prévus par le constructeur automobile à l'emplacement de l'immatriculation, et qui doivent être retirés au moment de la fixation de la première plaque d'immatriculation définitive. Ces ergots sont alignés horizontalement et séparés par une distance sensiblement égale à la longueur d'une plaque d'immatriculation.

Si aucun support n'a été prévu par le constructeur, un support spécifique conforme à l'invention est utilisé. Ce support est solidaire de la carrosserie ou du pare-choc de la voiture sur l'emplacement d'immatriculation, et est prévu pour recevoir le dispositif de fixation conforme à l'invention.

Suivant l'invention, le dispositif de fixation pour la fixation amovible d'une plaque, comme par exemple une plaque d'immatriculation spécifique, sur un support existant sur un véhicule, comme par exemple une plaque-support, comprenant des moyens de maintien de la plaque et des moyens de fixation du dispositif sur le support, est caractérisé en ce qu'il comprend deux éléments d'extrémité ayant chacun une face arrière disposée en service en regard dudit support, reliés entre eux par un élément de liaison capable d'exercer une force de rappel tendant à ramener les deux éléments d'extrémité l'un vers l'autre, et en ce que les moyens de maintien et les moyens de fixation sont disposés sur les deux éléments d'extrémité.

Ainsi, la plaque d'immatriculation spécifique n'est pas directement fixée sur le véhicule, mais elle est maintenue par le dispositif de fixation, qui est lui-même fixé de façon amovible sur le support existant sur le véhicule.

Il existe principalement deux formats de plaques d'immatriculation :
- les "plaques longues" pour lesquelles le numéro identifiant est inscrit sur une seule ligne,
- les "plaques hautes", plus hautes et souvent plus courtes que les précédentes, pour lesquelles le numéro identifiant est inscrit sur deux lignes superposées.

Un premier mode de réalisation du dispositif selon l'invention est plus particulièrement adapté aux situations où la plaque spécifique et le support, plaque-support ou support adapté, présentent sensiblement le même format : plaque spécifique longue sur support long, ou plaque spécifique haute sur support haut. Un deuxième mode de réalisation du dispositif est plus adapté aux situations où la plaque spécifique est plus longue que le support. Un troisième mode de réalisation du dispositif est plus adapté aux plaques hautes et réalise une adaptation pour plaques hautes d'un dispositif de fixation prévu pour plaques longues et « basses ».

Suivant l'invention, le support pour dispositif de fixation amovible d'une plaque d'immatriculation sur un véhicule, ledit dispositif comprenant des moyens de fixation, est caractérisé en ce qu'il comprend des moyens de solidarisation avec le véhicule et des moyens complémentaires de fixation qui coopèrent avec les moyens de fixation du dispositif de fixation pour réaliser ladite fixation amovible.

De préférence, le support pour dispositif de fixation comprend deux parties de support sur lesquelles sont disposés lesdits moyens de solidarisation et lesdits moyens complémentaires de fixation, et des moyens d'espacement pour définir l'espacement entre les deux parties de support.

Le procédé de mise en oeuvre du dispositif de fixation selon l'invention s'effectue en une première opération de maintien de la plaque spécifique et une seconde opération de fixation du dispositif sur le support, les deux opérations étant successives.

L'invention sera mieux comprise par la description ci-après d'exemples non limitatifs du dispositif de fixation et du support, illustrés aux dessins annexés, dans lesquels :
- la figure 1 représente en perspective avec arrachement un dispositif dans lequel est maintenue une plaque d'immatriculation spécifique ;
- la figure 2 représente en vue de face un élément d'extrémité ;
- la figure 3 représente en perspective un élément d'extrémité du dispositif de fixation ;
- les figures 4 et 5 représentent l'élément d'extrémité, respectivement en vue de dos et en coupe suivant la direction V-V de la figure 2, et illustrent une variante de réalisation de l'élément de liaison ;
- la figure 6 représente, en coupe suivant la direction VI-VI de la figure 2, des moyens de maintien de la plaque spécifique ;
- les figures 7 et 8 représentent en coupe longitudinale les moyens de fixation du dispositif de fixation sur le support existant sur le véhicule ;
- la figure 9 représente en perspective une première variante d'exécution d'un moyen de fixation du dispositif sur le support ;
- la figure 10 est analogue à la figure 1 pour le second mode de réalisation du dispositif ;
- la figure 11 illustre en perspective le troisième mode de réalisation du dispositif de fixation ;
- la figure 12 illustre en perspective une variante d'exécution d'un élément d'extrémité ;
- la figure 13 illustre, en coupe suivant la direction longitudinale du dispositif, un mode d'ancrage préféré de l'élément de liaison ;
- les figures 14 et 15 représentent respectivement en perspective et en vue latérale une variante d'exécution d'un moyen de fixation du dispositif sur le support ;
- la figure 16 illustre en perspective un premier mode de réalisation du support ;
- la figure 17 illustre en perspective une variante d'exécution d'un moyen de fixation ;
- la figure 18 illustre en perspective un support spécifique particulièrement adapté à la variante d'exécution du moyen de fixation de la figure 17 ;
- la figure 19 illustre en coupe longitudinale l'assemblage du moyen de fixation de la figure 17 et du support de la figure 18 ;
- les figures 20 et 21 illustrent respectivement en coupe longitudinale et en coupe transversale une autre variante d'exécution du moyen de fixation assemblé avec un support adapté ;
- la figure 22 illustre en vue arrière le moyen de fixation des figures 20 et 21 ;
- la figure 23 illustre en perspective une variante d'exécution du support spécifique des figures 20 à 22.

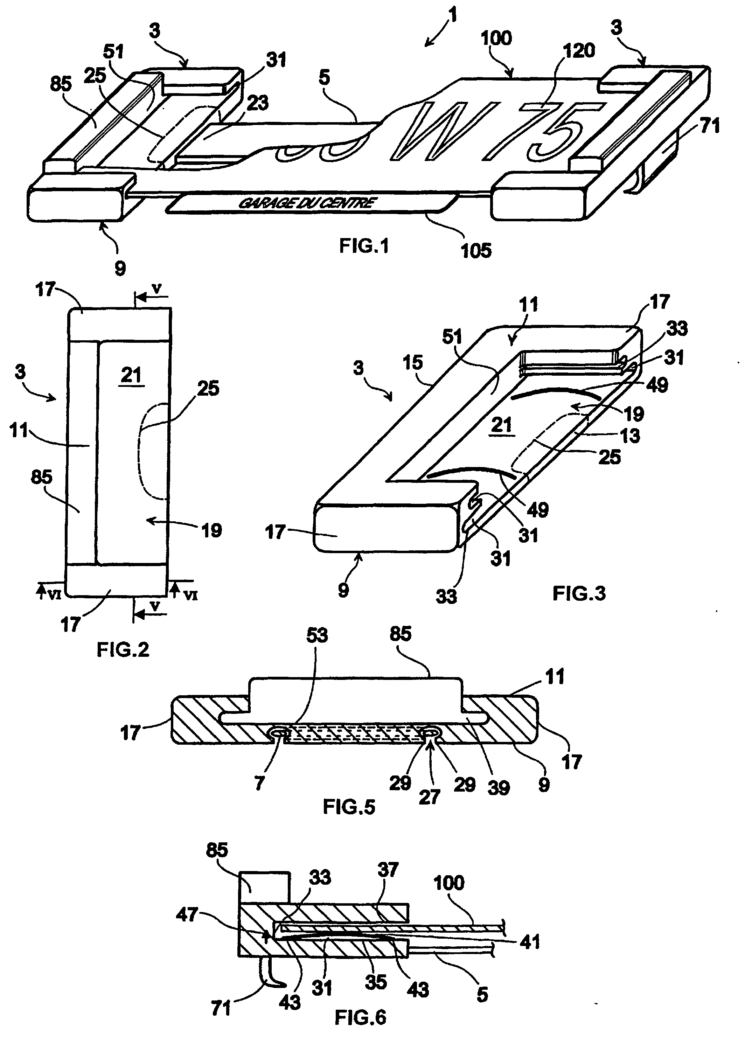

Comme illustré aux figures 1 à 9 et 12 à 15, le premier mode de réalisation du dispositif de fixation 1 comprend deux éléments d'extrémité 3 reliés entre eux par un élément de liaison 5, 7. Chaque élément d'extrémité 3, de forme sensiblement parallélépipédique, comprend une face arrière 9, sensiblement plane, et une face avant 11, parallèle et opposée à la face arrière 9. Entre la face arrière 9 et la face avant 11 s'étend perpendiculairement une bordure périphérique dont le contour sensiblement rectangulaire est constitué d'un côté intérieur 13 et d'un côté extérieur 15, sensiblement parallèles et opposés, entre lesquels sont insérés deux côtés latéraux 17, également sensiblement parallèles et opposés.

Chaque élément d'extrémité 3 comprend de préférence une échancrure 19 de sa face avant 11 qui s'ouvre vers le côté intérieur 13, de telle sorte que la bordure périphérique est plus basse sur le côté intérieur 13 que sur le côté extérieur 15 et sur les côtés latéraux 17. Le fond de l'échancrure 19 définit sur l'élément d'extrémité 3 une face de glissement 21 sensiblement plane, parallèle à la face arrière 9 et à la face avant 11, bordée vers le côté extérieur 15 et les côtés latéraux 17, et ouverte vers le côté intérieur 13.

L'élément de liaison 5, 7 représenté aux figures 1, 6-8, 10, 13 est de préférence une sangle 5 qui présente une élasticité longitudinale. Chacune de ses extrémités 23 est ancrée sur l'un des éléments d'extrémité 3, la zone d'ancrage 25 étant situé de préférence vers le côté intérieur 13, sur la face arrière 9 ou sur la face de glissement 21 ou entre les deux. L'ancrage peut être obtenu par collage, couture, sertissage, rivetage, moulage de l'extrémité 23 de la sangle 5 directement avec l'élément d'extrémité 3, ou surmoulage, ou par tout autre moyen d'ancrage capable de résister à l'arrachement lorsque la sangle 5 est soumise à une traction axiale et/ou exerce une force de rappel sur les deux éléments d'extrémité 3.

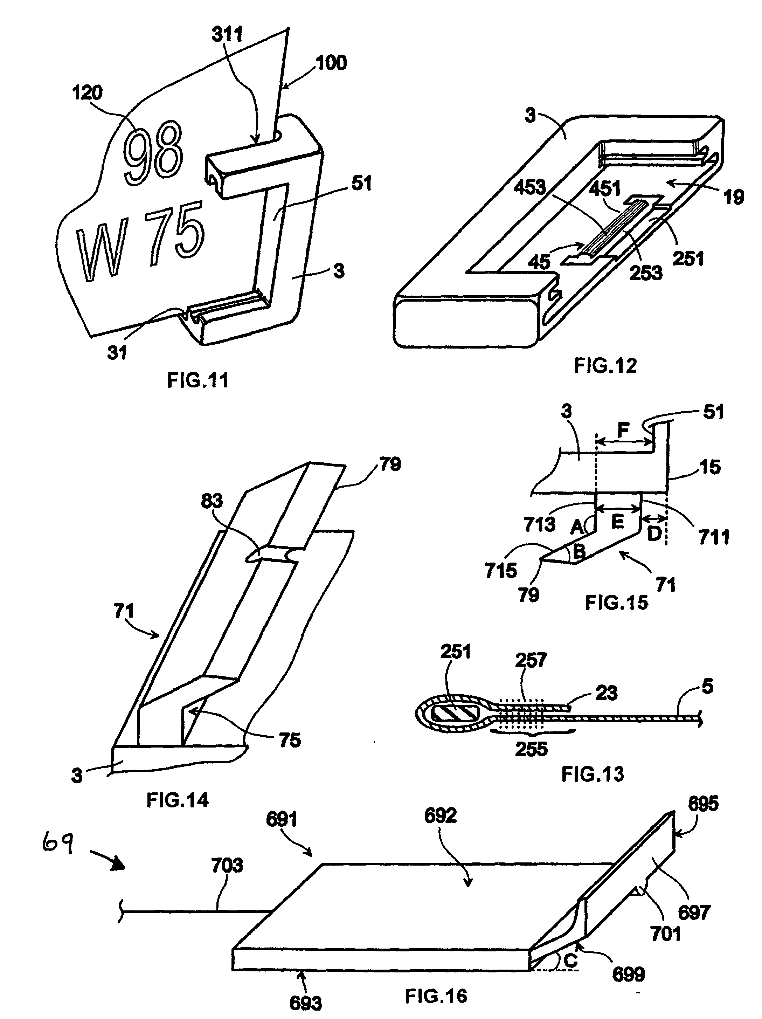

La figure 13 illustre un mode d'ancrage préféré de l'élément de liaison 5, 7 lorsque celui-ci est une sangle 5. La zone d'ancrage 25 comprend une bande d'ancrage 251 du côté intérieur 13, délimitée d'une part par le bord du côte intérieur 13 et d'autre part par une perforation 253 de l'élément d'extrémité 3 (figure 12) qui relie le fond de l'échancrure 19 et la face arrière 9. La sangle 5 est alors enroulée autour de ladite bande 251 et son extrémité 23 est rabattue sur la bande elle-même, créant ainsi une double-épaisseur 255 de sangle. Cette double-épaisseur 255 est fixée au moyen de points de couture 257. De préférence, la partie rabattue est disposée en service vers l'avant du dispositif pour ne pas gêner le glissement du dipositif de fixation 1 sur le support 61, 63, 69, 91.

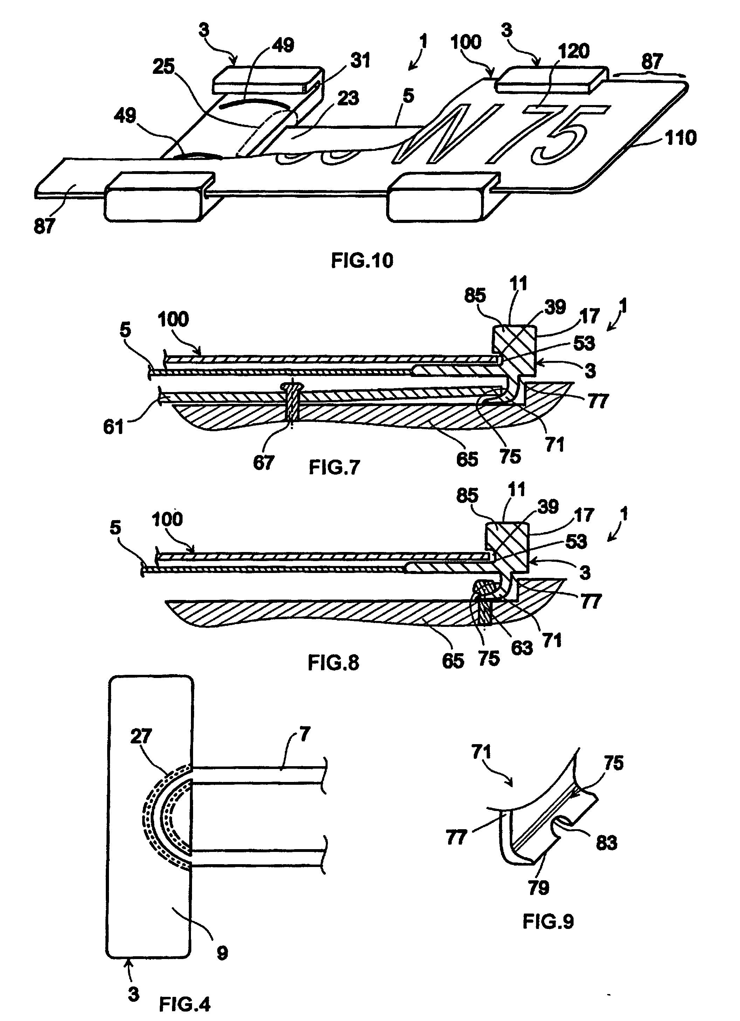

Une variante d'exécution de l'élément de liaison 5, 7 et de son mode d'ancrage est illustrée aux figures 4 et 5. La figure 4 montre un élément d'extrémité 3 en vue de dos ayant une gorge 27 creusée dans sa face arrière 9. Cette gorge 27 présente une forme de C dont les branches sont sensiblement parallèles et débouchent vers le côté intérieur 13. L'élément de liaison 5, 7 est ici un bracelet élastique 7 qui est introduit en force et logé dans la gorge 27 dont la section est conformée à la section du bracelet élastique 7. La figure 5 montre, un élément d'extrémité 3 muni d'un tel bracelet 7. Dans l'exemple représenté, le bracelet 7 présente une section sensiblement circulaire. La gorge 27 présente une section sensiblement circulaire et ses bords 29 sont rapprochés l'un de l'autre pour enserrer le bracelet 7.

D'autres variantes d'exécution de l'élément de liaison 5, 7 (non représentées) prévoient plusieurs sangles élastiques, parallèles entre elles ou croisées, ou un ressort, ou une crémaillère, ou tout autre moyen capable d'exercer une force de rappel sur les deux éléments d'extrémité 3, lorsqu'on les a préalablement écartés l'un de l'autre.

Comme illustré aux figures, les moyens de maintien 31, 33, 41, 45, 49, 51, 53, 253 disposés sur chaque élément d'extrémité 3 comprennent une paire de rainures 31. Chaque rainure 31 est ménagée dans l'épaisseur de l'un des côtés latéraux 17, et débouche sur la face de glissement 21. Les deux rainures 31 sont parallèles entre elles, à la face arrière 9 et à la face avant 11. La distance entre les fonds 33 des rainures 31 est sensiblement égale à la largeur de la plaque spécifique 100. Les rainures 31 ont un rôle de maintien et de guidage longitudinal pour ladite plaque spécifique 100.

La figure 3 illustre une variante d'exécution du dispositif de fixation 1. Chaque élément d'extrémité 3 comprend deux paires de rainures 31, la deuxième paire de rainures 31 est parallèle à la première paire et située entre celle-ci et la face avant 11. Elle débouche sur l'échancrure 19. Les distances entre les fonds 33 des rainures 31 sont différentes d'une paire de rainures 31 à l'autre, pour pouvoir maintenir et guider des plaques spécifiques 100 de largeurs différentes.

Suivant une autre variante d'exécution illustrée à la figure 6 et compatible avec les précédentes, les moyens de maintien 31, 33, 41, 45, 51, 53, 253 comprennent au moins une lame élastique 41 disposée dans chaque rainure 31, arrimée par chacune de ses extrémités 43 à l'une des parois internes 35 de ladite rainure 31. La lame élastique 41 est disposée dans la rainure 31 sensiblement parallèle à la direction de guidage, la distance entre ses deux extrémités étant sensiblement plus courte que sa longueur, de telle manière que ladite lame applique la plaque spécifique 100 contre l'autre paroi interne 37 lorsque celle-ci est en position dans la rainure 31, suivant une direction perpendiculaire à la rainure 31 et représentée par la flèche 47.

Le rôle d'une telle lame élastique 41 est de maintenir et de stabiliser la plaque spécifique 100 dans le dispositif de fixation 1 lorsque l'épaisseur de ladite plaque spécifique 100 est sensiblement inférieure à la hauteur des rainures 31.

Une variante d'exécution du dispositif 1, illustrée à la figure 3, présente deux lames élastiques 49 arrimées par chacune de leurs extrémités à la face de glissement 21, disposées parallèlement aux rainures 31, à proximité du côté intérieur 13 et de part et d'autre de la zone d'ancrage 25. Leur rôle consiste à appliquer la plaque spécifique 100 contre la paroi interne 37 des rainures 31 qui est la plus éloignée de ladite face de glissement 21, pour améliorer la stabilité de la plaque spécifique 100 en position dans le dispositif 1.

Suivant une variante d'exécution préférée illustrée à la figure 12, chaque élément d'extrémité 3 est moulé et comprend une lame élastique 45 moulée d'ensemble, prévue pour s'étendre dans une perforation 253 ménagée dans l'élément d'extrémité, perforation qui relie le fond de l'échancrure 19 et la face arrière 9. Cette lame 45 présente vers l'extérieur de l'élément d'extrémité 3 une partie plane 451 qui constitue une continuité de la face de glissement 21. La partie plane 451 se prolonge vers l'intérieur de l'élément d'extrémité par une partie bombée 453 en saillie vers l'avant par rapport au fond de l'échancrure 19, et qui ne dépasse pas vers la face arrière 9 en position de repos. La présence de la perforation 253 autorise un débattement élastique de la lame 45 vers l'arrière de l'élément d'extrémité lors de l'installation d'une plaque spécifique 100 dans l'élément d'extrémité 3. Ladite plaque spécifique 100 est maintenue dans les rainures 31 grâce à l'action d'une force de rappel exercée de la face arrière 9 vers la face avant 11 par la lame élastique 45.

Conformément au premier mode de réalisation du dispositif 1, les moyens de maintien 31, 33, 41, 45, 51, 53, 253 comprennent une butée transversale 51, 53 de chaque élément d'extrémité 3, comme illustré aux figures 1-3 et 6-8, pour empêcher le déplacement longitudinal de la plaque spécifique 100 lorsqu'elle est en position dans le dispositif de fixation 1. La butée transversale 51, 53 est située dans un plan perpendiculaire à la direction de la force de rappel exercée par l'élément de liaison 5, 7 entre les deux éléments d'extrémité 3.

Selon une variante d'exécution du dispositif 1 (figures 1-3, 6), ladite butée 51, 53 est constituée par la face interne 51 du côté extérieur 15. Selon une autre variante d'exécution du dispositif 1, (figures 7 et 8), ladite butée 51, 53 est constituée par le fond 53 d'une rainure additionnelle 39, ménagée dans le côté extérieur 15 et communiquant avec chaque rainure 31 de guidage.

Pour mettre en place la plaque spécifique 100 dans le dispositif de fixation 1, conformément au premier mode de réalisation, on effectue les étapes suivantes :
- on écarte les deux éléments d'extrémité 3 l'un de l'autre, en résistant à la force de rappel de l'élément de liaison 5, 7,
- on introduit chaque extrémité 110 de la plaque spécifique 100 dans les rainures de guidage 31 en faisant glisser ladite extrémité 110 sur la face de glissement 21 et/ou les parois 35, 37 des rainures 31 de l'élément d'extrémité 3 correspondant, ladite extrémité 110 se déplaçant du côté intérieur 13 vers le côté extérieur 15, le dos de la plaque spécifique 100 étant en regard de l'élément de liaison 5, 7, de façon à faire apparaître le numéro identifiant vers l'avant du dispositif 1.
- on relâche la traction exercée sur l'élément de liaison 5, 7 jusqu'à ce que chaque extrémité 110 de la plaque spécifique 100 se trouve stoppée par une butée transversale 51, 53.

Lorsque la plaque spécifique 100 est en position dans le dispositif de fixation 1, tous les caractères 120 formant le numéro d'identification sont visibles, grâce à la présence de l'échancrure 19. De plus, la dimension des côtés latéraux 17 suivant la direction longitudinale du dispositif 1 est prévue suffisamment longue pour assurer un maintien robuste de la plaque spécifique 100 et suffisamment courte pour que les éléments d'extrémité 3 ne soient pas en contact avec une bavette publicitaire 105 s'étendant le cas échéant vers le bas de la plaque spécifique 100, une fois que la plaque spécifique est 100 en position (figure 1).

Pour retirer la plaque spécifique 100 du dispositif de fixation 1, on procède de manière opposée. On écarte les deux éléments d'extrémité 3 l'un de l'autre. Les extrémités 110 de la plaque spécifique 100 glissent le long des rainures 31 du côté extérieur 15 vers le côté intérieur 13, jusqu'à ce que la plaque spécifique 100 se trouve libérée.

Les deuxième et troisième modes de réalisation du dispositif 1 adaptés au cas où la plaque spécifique et la plaque-support n'ont pas les mêmes dimensions sont illustrés aux figures 10 et 11 et vont maintenant être décrits pour leurs différences avec le premier mode de réalisation du dispositif 1.

Selon le deuxième mode de réalisation du dispositif 1, l'échancrure 19 de chaque élément d'extrémité 3 s'ouvre à la fois vers le côté intérieur 13 et vers le côté extérieur 15, de telle sorte que la bordure périphérique est plus basse sur le côté intérieur 13 et sur le côté extérieur 15 que sur les côtés latéraux 17. La face de glissement 21 définie par le fond de l'échancrure 19 débouche vers le côté intérieur 13 et vers le côté extérieur 15. Selon ce deuxième mode de réalisation, l'élément d'extrémité 3 ne présente pas de butée transversale, et les rainures de guidage 31 sont ouvertes à chaque extrémité.

Pour mettre en place la plaque spécifique 100 dans le dispositif de fixation 1, conformément au second mode de réalisation, on procède de la même façon que pour le premier mode de réalisation, à l'exception de la dernière étape au cours de laquelle on relâche la traction exercée sur l'élément de liaison 5, 7 jusqu'à ce qu'il atteigne sa position de repos.

La plaque 100, de format "plaque longue" comme préféré pour le deuxième mode de réalisation, dépasse de chaque élément d'extrémité 3, par son côté extérieur 15, lorsqu'elle est en place dans le dispositif 1 (figure 10). La portion 87 de la plaque spécifique 100 qui dépasse est suffisamment longue pour que ladite plaque spécifique 100 soit stabilisée suivant sa direction longitudinale dans le dispositif 1, même en l'absence de butées transversales 51, 53, lorsque le dispositif ainsi équipé est fixé sur le support 61, 63, 69, 91 de format "plaque courte".

Selon le troisième mode de réalisation du dispositif 1, plus particulièrement prévu pour les plaques hautes 100, c'est à dire les plaques ayant deux lignes de caractères, on adapte un dispositif pour plaques « longues », c'est à dire ayant une seule ligne de caractères. Cette adaptation, illustrée à la figure 11, consiste en la transformation de la ou des rainures 31 d'un côté latéral 17 de chaque élément d'extrémité en fentes 311. Cette transformation peut être obtenue par usinage ou par découpe à la scie ou au laser ou toute autre méthode de découpe équivalente connue de l'homme du métier. La face de glissement 21 définie par le fond de l'échancrure 19 d ébouche cette fois vers un côté latéral 17, qui est destiné à se trouver, en service, au-dessous de l'autre côté latéral 17 du même élément d'extrémité 3. La plaque haute est alors maintenue, en service, par la rainure latérale 31, 33 qui n'est pas fendue et par la butée transversale 51, 53 de chaque élément d'extrémité 3.

On observe que lorsque la plaque spécifique 100 est en position dans le dispositif de fixation 1, tous les caractères 120 formant le numéro d'identification sont visibles.

De préférence pour les deuxième et troisième modes de réalisation, le dispositif de fixation est muni de lames élastiques 41, 45, 49.
On va maintenant décrire la fixation du dispositif de fixation 1 sur le support 61, 63, 69, 91.

La figure 7 illustre en coupe longitudinale ladite fixation, lorsque ledit support est une plaque-support 61, fixée rigidement au véhicule 65, par exemple au moyen de rivets 67.

Les moyens de fixation 71, 75, 79, 83, 89, 891, 893, 895, 899 du dispositif 1 sur le support 61, 63, 69, 91 comprennent une paire de crochets 71, disposés chacun sur l'un des éléments d'extrémité 3, et s'étendant à partir de la face arrière 9, à proximité du côté extérieur 15 dudit élément d'extrémité 3. Les figures 9 et 15 représentent de manière isolée un tel crochet 71.

Les moyens de fixation 71, 75, 79, 83, 89, 891, 893, 895, 899 comprennent également une face interne concave 75 du crochet 71, qui est orientée vers le côté intérieur 13 et qui s'étend entre une base 77 du crochet 71, sensiblement renflée et solidaire de la face arrière 9, et un bord d'attaque 79 du crochet 71.

Les moyens de fixation 71, 75, 79, 83 89, 891, 893, 895, 899 comprennent également une forme effilée du bord d'attaque 79.

Selon la variante d'exécution préférée illustrée aux figures 14 et 15, le crochet 71 présente un profil anguleux comprenant six facettes successives. Deux facettes 711 et 713 sensiblement parallèles entre elles et sensiblement perpendiculaires à la face arrière 9 de l'élément d'extrémité 3 délimitent la base 77 dudit crchet 71. Deux facettes 713, 715 forment la face intérieure concave du crochet 71. Les dimensions préférées d'un tel crochet 71 sont les suivantes :
- distance entre le bord extérieur 711 du crochet 71 et le bord du côté extérieur 15 de l'élément d'extrémité 3 : D = 2,4 mm ;
- épaisseur du crochet : E = 4,2 mm ;
- distance entre la facette 713 du crochet et la butée transversale 51 : F = 5,4 mm ;
- angle formé entre les deux facettes 713, 715 de la face intérieure concave 75 : A = 120 ° ;
- angle de bord d'attaque 79 : B = 35 °.

Pour fixer de façon amovible le dispositif 1 équipé d'une plaque spécifique 100 sur une plaque-support 61, on effectue les étapes suivantes :
- on écarte les deux éléments d'extrémité 3 l'un de l'autre en résistant à la force de rappel de l'élément de liaison 5, 7, jusqu'à atteindre un écartement légèrement supérieur à la longueur de la plaque-support 61, mais inférieur à l'écartement nécessaire pour dégager la plaque spécifique 100 du dispositif 1,
- on applique les faces arrières 9 des deux éléments d'extrémité 3 contre la plaque-support 61,
- on engage les bords d'attaque 79 des crochets 71 derrière les bords de la plaque-support 61 et on relâche progressivement la traction exercée sur l'élément de liaison 5, 7 jusqu'à ce que les faces intérieures concaves 75 desdits crochets 71 soient en contact contre lesdits bords de la plaque-support 61.

Pour retirer le dispositif de fixation 1 du support 61, 63, on procède de manière opposée. On écarte les deux éléments d'extrémité 3 l'un de l'autre jusqu'à ce que les crochets 71 se désengagent progressivement des bords de la plaque spécifique 100.

Un avantage du dispositif de fixation 1 selon l'invention est sa simplicité de mise en oeuvre. Le même élément de liaison 5, 7 est sollicité en traction longitudinale pour à la fois l'opération de mise en place de la plaque spécifique 100 dans le dispositif 1 et l'opération de fixation du dispositif 1 sur le support 61, 63.

La position du crochet 71 sur chaque élément d'extrémité 3 à proximité du côté extérieur 15 et la longueur des côtés latéraux 17 sont prévus pour que l'écartement des deux éléments d'extrémité 3 l'un de l'autre au cours de l'opération de fixation du dispositif 1 ne provoque pas la désolidarisation de la plaque spécifique 100 du dispositif 1.

Les moyens de fixation 71, 75, 79, 83 89, 891, 893, 895, 899 comprennent en outre au moins une encoche 83 découpée dans le bord d'attaque 79 de chaque crochet 71 (figure 9). Lesdites encoches sont prévues pour la fixation du dispositif 1 sur le véhicule 65 lorsque le support 61, 63 est constitué d'une paire d'ergots 63. Le procédé de fixation est analogue au procédé de fixation sur une plaque-support 61. L'opérateur doit seulement s'assurer que les ergots 63 sont bien engagés dans lesdites encoches 83 lorsqu'il finit de relâcher progressivement la tension de l'élément de liaison 5, 7.

On va maintenant décrire la fixation du dispositif 1 sur le véhicule 65 lorsque ledit véhicule 65 est dépourvu de plaque-support 61 et de support 63 prévu par le constructeur automobile. Dans ce cas de figure, des supports spécifiques 69, 91 spécialement adaptés font également l'objet de la présente invention.

Une première situation est celle dans laquelle on utilise comme moyens de fixation du dispositif 1 des crochets 71 identiques aux crochets prévus pour une fixation sur une plaque-support 61. Un premier type support spécifique 69 conforme à l'invention est conçu pour être adapté audit crochet 71. Il comprend deux parties 691 de support, illustrées à la figure 16, reliées par des moyens d'espacement 701.

Chaque partie 691 de support comprend des moyens de solidarisation 693 pour sa solidarisation avec le véhicule 65 et des moyens complémentaires de fixation 695, 697, 699, 701 pour la fixation d'un élément d'extrémité 3 du dispositif 1.

Les moyens complémentaires de fixation 695, 697, 699 comprennent une conformation 695 complémentaire de la face intérieure concave 75 du crochet 71. Ladite conformation complémentaire 695 comprend deux facettes 697, 699 de dimensions sensiblement égales aux facettes 713, 715 de la face intérieure concave 75 respectivement, et forment entre elles un angle A sensiblement identique à l'angle A formé par lesdites facettes 713 et 715. Un renflement 701 est prévu sur ladite conformation 695, avec des dimensions et une position complémentaires de celles de l'encoche 83 découpée dans le bord d'attaque 79 du crochet 71.

Les moyens de solidarisation 693 comprennent une plaque sensiblement plane 692 de la partie 691 de support, ayant une face sensiblement plane 693, et qui s'étend à partir de la conformation complémentaire 695 dans un plan formant un angle de C = 180°-(A+B) avec la facette 699. Ladite face 693 est revêtue d'un adhésif (non représenté) tel qu'une colle ou une pellicule adhésive double-face ou tout autre adhésif approprié. L'adhésif est prévu de préférence avec une pellicule de protection que l'on retire au moment de l'installation de la partie 691 de support.

Les moyens d'espacement 703 comprennent un lien d'espacement 703 qui relie les deux parties 691 de ce premier type de support spécifique 69, et qui s'étend sensiblement dans le plan de la plaque 692 à partir de son bord opposé à la conformétion complémentaire 695 (voir figure 16). Ledit lien d'espacement 703 peut être souple ou rigide, de préférence souple pour un encombrement réduit du support spécifique 69 dans un emballage. Il doit être inextensible, c'est à dire qu'il ne doit pas être capable de s'allonger en réponse à une sollicitation en traction. Il peut être réalisé en tout matériau synthétique présentant les qualités requises, et peut être moulé avec le support spécifique 69 lorsque celui-ci est moulé. La longueur du lien d'espacement 703 est dimensionnée de manière à ce que la distance entre les bords libres des deux conformations complémentaires 695 soit sensiblement égale à la longueur d'une plaque d'immatriculation lorsque le lien d'espacement 703 est déployé (dans le cas d'un lien souple).

Pour installer le premier type de support spécifique 69 sur l'emplacement d'immatriculation de la carrosserie ou du pare-choc, on met à nu la face adhésive 695 de chaque partie 691, par exemple en retirant la pellicule de protection, et on applique ladite face adhésive 693 de chaque partie 691 de support sur ledit emplacement d'immatriculation, le lien d'espacement 703 étant sensiblement horizontal et déployé (le cas échéant). Le support spécifique 69 est alors solidaire du véhicule 65. Les deux conformations complémentaires 695 sont parallèles entre elles et opposées.

Pour installer de façon amovible le dispositif 1 équipé d'une plaque spécifique 100 sur le premier type de support spécifique 69, on procède de la même façon que pour son installation sur une plaque-support :
- on écarte les deux éléments d'extrémité 3 l'un de l'autre en résistant à la force de rappel de l'élément de liaison 5, 7, jusqu'à atteindre un écartement légèrement supérieur à la distance séparant les bords libres des deux conformations complémentaires 695, mais qui reste inférieur à l'écartement nécessaire pour dégager la plaque spécifique 100 du dispositif 1,
- on applique les faces arrières 9 des deux éléments d'extrémité 3 contre les faces libres des deux plaques planes 692,
- on engage les bords d'attaque 79 des crochets 71 derrière les bords libres des conformations complémentaires 695, et on relâche progressivement la traction exercée sur l'élément de liaison 5, 7 jusqu'à ce que les faces intérieures concaves 75 desdits crochets 71 soient en contact avec les facettes 697, 699 des conformations complémentaires 695, le centrage se faisant par la mise en coïncidence du renflement 701 de la conformation complémentaire 695 avec l'encoche 83 du bord effilé 79 du crochet 71.

La position excentrée de la conformation complémentaire 695 relativement à la plaque plane 692 sur chaque partie de support 691 est justifiée par le fait que lorsque le dispositif de fixation 1 équipé de la plaque spécifique 100 est installé sur le support spécifique 69, on ne doit pas voir apparaître ledit support spécifique 69 sous le dispositif 1. Pour éviter les risques éventuels d'arrachement des faces adhésives 693 des parties 691 de support rendues solidaires du véhicule 65, sous l'effet de la force de rappel exercée par l'élément de liaison 5, 7, l'homme du métier saura dimensionner la surface desdites faces adhésives 693.

Pour retirer le support 69 de l'emplacement d'immatriculation avant la pose d'une plaque d'immatriculation définitive, on utilise tout outil non agressif approprié pour décoller la face adhésives 963 ou pour séparer l'adhésif de la plaque plane 692.

Un avantage d'un tel support spécifique 69 réside dans le fait que le même dispositif de fixation 1 (muni de crochet 71) peut être utilisé, que l'on soit en présence ou non d'une plaque-support sur la voiture.

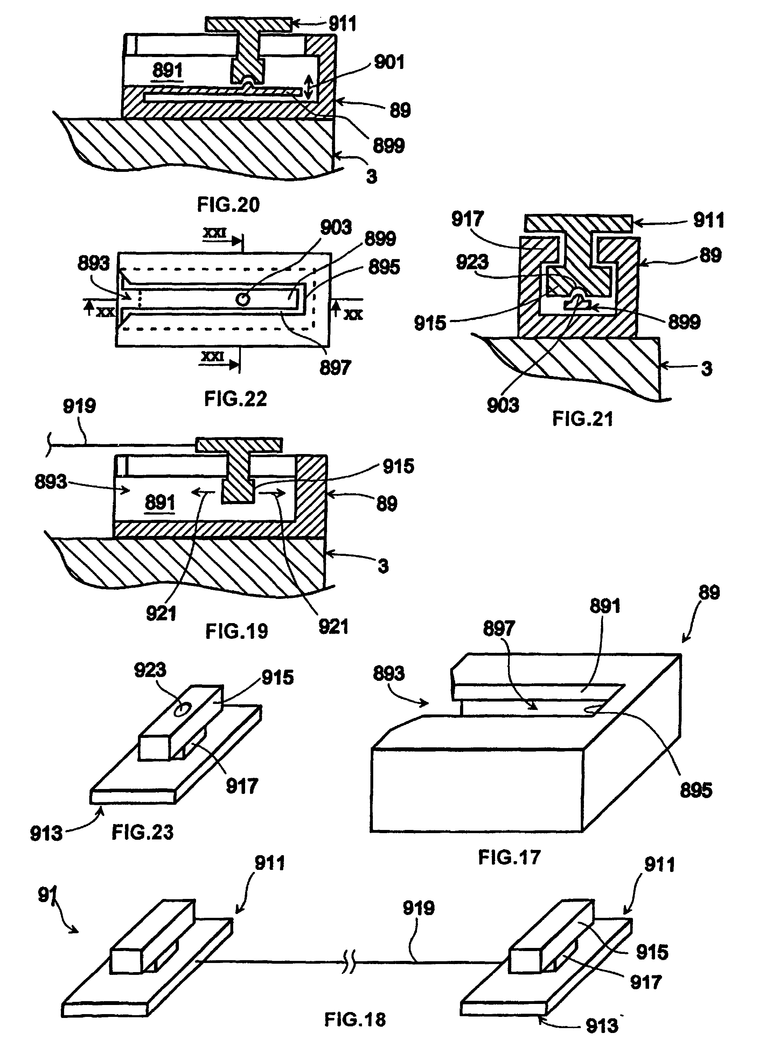

Dans une deuxième situation, les éléments d'extrémité 3 sont munis de moyens de fixation 89 selon une variante d'exécution prévus pour coopérer avec un second type de support spécifique 91, conformément à l'invention et illustrés respectivement aux figures 17 à 19.

Comme représenté à la figure 17, les moyens de fixation 83, 89, 891, 893, 895, 899 comprennent un bloc de fixation 89 de forme sensiblement parallélépipédique, muni d'une glissière 891 qui présente une entrée de glissière 893 sur un côté du bloc de fixation 89, une butée de glissière 895 sur un côté opposé dudit bloc 89, et une ouverture de glissière 897 qui relie l'entrée 893 et la butée 895.

Le bloc de fixation 89 est fixé rigidement sur la face arrière 9 de l'élément d'extrémité 3, par tout moyen tel que vissage, rivetage, collage, encliquetage, ou solidarisé par moulage d'ensemble. Le bloc 89 est positionné relativement à l'élément d'extrémité 3 de telle manière que la glissère présente une ouverture de glissière 897 orientée vers l'arrière de l'élément d'extrémité 3, et que l'entrée de glissière 893 soit orientée vers l'extérieur dudit élément 3.

Le second type de support spécifique 91 adapté à ladite glissière 891 est illustré à la figure 18. Il comprend des moyens de solidarisation 913, des moyens complémentaires de fixation 915, 917, et des moyens d'espacement 919. Il est formé de deux parties de support 911, constituées chacune par un plot 911.

Les moyens de solidarisation comprennent une face adhésive 913 de chaque plot 911, et les moyens d'espacement comprennent un lien d'espacement 919 analogues à ceux du premier type de support spécifique 69.

Les moyens complémentaires de fixation comprennent une tête de plot 915 et un col de plot 917, dimensionnés de manière à autoriser un coulissement du plot 911 dans la glissière 891.

L'installation du second type de support spécifique 91 sur l'emplacement d'immatriculation est analogue à celle du premier type de support spécifique 69.
- on écarte les deux éléments d'extrémité 3 l'un de l'autre en résistant à la force de rappel de l'élément de liaison 5, 7, jusqu'à atteindre un écartement légèrement supérieur à la distance entre les bords libres du support 91, mais inférieur à l'écartement nécessaire pour dégager la plaque spécifique 100 du dispositif 1,
- on présente les entrées de glissière 893 face aux plots 911, chaque glissière 891 étant à l'extérieur du plot 911 correspondant, suivant la direction longitudinale du dispositif 1 équipé de la plaque spécifique 100,
- on relâche progressivement la traction exercée sur l'élément de liaison 5, 7, en introduisant chaque glissière 891 autour du plot 911 correspondant jusqu'à ce que la tension dudit élément de liaison 5, 7 disparaisse.

Pour le retrait du dispositif 1 équipé de la plaque spécifique, on procède de manière inverse.

La figure 19 illustre l'élément d'extrémité 3 muni d'une glissière 891, installé sur un plot 911.

La longueur du lien d'espacement 919 est choisie de telle manière que la distance entre les bords libres des plots 911 soit inférieure à la longueur de la plaque spécifique 100. Il en résulte que la tension de l'élément de liaison n'est mise en oeuvre que pour assurer le maintien de la plaque spécifique 100 dans le dispositif de fixation 1, et non pas pour assurer la fixation du dispositif de fixation 1 sur le support spécifique 91.

Dans cette situation, la fixation du dispositif de fixation 1 sur le support spécifique 91 n'est pas une fixation rigide, puisqu'un coulissement de chaque plot 911 dans sa glissière 891 est autorisé, matérialisé par les flêches 921 à la figure 19.

La longueur de chaque glissière 891 et sa position relativement à l'élément d'extrémité 3 sont choisies de telle manière que la distance entre les deux entrées de glissières 893 soit inférieure à la distance entre les bords les plus extérieurs des plots 911, lesdits plots étant reliés entre eux par le lien d'espacement 919 fixé sur leurs bords intérieurs respectifs. Il en résulte que lesdits plots 911 sont empêchés de sortir des glissières 891 à moins qu'une traction de l'élément de liaison 5, 7 ne soit exercée pour un retrait volontaire du dispositif de fixation 1 équipé de la plaque spécifique 100.

Un avantage de cette réalisation réside dans le fait qu'en position installée, l'élément de liaison n'exerce aucune force de rappel susceptible de provoquer l'arrachement des moyens de solidarisation 913 des plots 911.

Une variante d'exécution des moyens de fixation 89, 891, 893, 895, 899 et du support 91 est illustrée aux figures 20 à 22.

Selon cette variante, les moyens de fixation comprennent, outre une glissière 891 ayant une entrée 893, une ouverture 897 et une butée 895, une languette élastique 899. Ladite languette 899 est disposée vers le fond de la glissière 891 et rattachée au bloc 89 vers l'entrée de glissière 893. Elle est, de par son élasticité, capable d'un petit débattement sensiblement perpendiculaire à la direction de coulissement dans le plan longitudinal (flèche 901 à la figure 20).

Le support spécifique 91 adapté à cette variante comprend une paire de plots 911 analogues aux plots 911 précédemment décrits, et illustrés à la figure 23. Les moyens d'espacement sont cette fois situés à la fois sur le moyen de fixation 89 et sur le support spécifique 91. Ils comprennent un creux additionnel 923 de la tête de plot 915, un bossage 903 de la languette 899 disposé sur la face arrière de celle-ci, en regard de l'ouverture de glissière 897, et de l'élasticité de ladite languette 899. Ils sont dimensionnés de telle manière que le creux 923 enveloppe le bossage 903, et s'engagent et/ou se désengagent grâce à l'élasticité de la languette 899.

Suivant cette variante d'exécution, la solidarisation du support 91 avec le véhiculee 65 et la fixation du dispositif de fixation 1 équipé d'une plaque spécifique 100 sur le support 91 se font simultanément :
- on retire la pellicule de protection des faces adhésives 913 des plots 911,
- on introduit les plots 911 dans les glissières 891 et on les pré-positionne en engageant les creux 923 et les bossages 903, en jouant sur l'élasticité des languettes 899,
- on maintient l'engagement des creux 923 et des bossages 903 tout en appliquant les surfaces adhésives 913 sur l'emplacement d'immatriculation, puis on relâche.

Un avantage de cette variante d'exécution réside dans le fait que l'installation du dispositif 1 équipé d'une plaque spécifique 100 ne met pas en oeuvre la tension de l'élément de liaison 5, 7.

Suivant cette variante d'exécution, l'engagement des creux 923 et des bossages 903 avant la solidarisation du support 91 avec le véhicule 65 joue un rôle analogue à celui du lien d'espacement 919 précédemment décrit.

De façon optionnelle, chaque élément d'extrémité 3 est muni d'un organe de préhension 85, qui est constitué dans l'exemple illustré (figures 1-2, 5-8, 10) d'un renflement du côté extérieur 15 dirigé vers l'avant de l'élément d'extrémité 3. Il pourrait également être constitué d'une poignée ou de tout autre moyen permettant à l'opérateur une meilleure préhension des éléments d'extrémité 3 lorsqu'il les écarte l'un de l'autre en résistant à la force de rappel de l'élément de liaison 5, 7. La figure 3 représente un élément d'extrémité 3 qui n'est pas muni d'un tel organe de préhension 85.

Les éléments d'extrémité 3, les moyens de maintien 31, 33, 41, 45, 51, 53, 253 et les moyens de fixation 71, 75, 79, 83, 89, 891, 893, 895, 899 du dispositif 1 ainsi que les supports spécifiques 69, 91 et les moyens d'espacement 703, 919 sont réalisés de préférence en matière synthétique moulée, comme une matière plastique ou une résine. On choisira de préférence des matériaux commercialisés sous le nom de nylon ou de stamylan, ou de l'ABS, ou un polyamide chargé ou non en verre. Le crochet 71, la lame 45, la glissière 891, et le cas échéant l'organe de préhension, 85 sont de préférence moulés avec l'élément d'extrémité 3. Les lames 41, 49 sont de préférence réalisées en un matériau flexible et élastique, comme par exemple du métal. La sangle 5 et/ou le bracelet 7 sont de préférence réalisés en ruban élastique tissé ou en caoutchouc. L'élément de liaison 5, 7 présente une élasticité telle que le dispositif est capable de s'adapter aux deux formats de plaques : "plaques longues" et "plaques hautes".

Bien sûr l'invention n'est pas limitée aux exemples qui ont été décrits. D'autres variantes de réalisation sont envisageables sans sortir du cadre de l'invention. Les éléments d'extrémité 3 et/ou les supports spécifiques 69, 91 pourraient être usinés plutôt que moulés. Les éléments d'extrémités pourraient être munis de plus de deux paires de rainures 31 de guidage superposées. Chaque élément d'extrémité 3 pourrait être muni de plusieurs crochets 71 répartis régulièrement sur sa face arrière 9.

Les lames élastiques 41, 45, 49 pourraient être remplacées par tout autre moyen permettant d'appliquer la plaque spécifique 100 contre l'une des paroi interne 35, 37 des rainures 31 pour stabiliser celle-ci.

Les moyens de solidarisation des supports spécifiques 69, 91, sur le véhicule 65 pourraient être des faces non adhésives rendus adhésives au moment de la solidarisation. On pourraient également envisager des moyens de solidarisation non adhésifs, par exemple des excroissances prévues sur les parties de support 691, 911, de type « sapin », destinées à être encliquetées dans des orifices prévus sur le véhicule 65.

Les plots 911 pourraient présenter des sections sensiblement ciculaires, à la place des sections rectangulaires qui ont été décrites.

Le dispositif 1 muni de crochets 71 est aisément applicable aux véhicules neufs pour lesquels le support prévu par les constructeurs est une paire de fentes plutôt qu'une paire d'ergots.

On pourrait également utiliser ce dispositif de fixation pour d'autres applications de mise en oeuvre de plaques délivrant des messages destinées à être superposées sur un emplacement déterminé, par exemple lors des expositions de véhicules de collection ou de véhicules neufs.

## Revendications

1. Dispositif de fixation (1) pour la fixation amovible d'une plaque, comme par exemple une plaque d'immatriculation spécifique (100), sur un support (61, 63, 69, 91) existant sur un véhicule (65), comme par exemple une plaque-support (61), comprenant des moyens de maintien (31, 33, 41, 45, 51, 53, 253) de la plaque (100) et des moyens de fixation (71, 75, 79, 83, 89, 891, 893, 895, 899) du dispositif (1) sur le support (61,63, 69, 91), comprenant deux éléments d'extrémité (3) ayant chacun une face arrière (9) disposée en service en regard dudit support (61, 63, 69, 91), reliés entre eux par un élément de liaison (5, 7), **caractérisé en ce que** le élément de liason (5, 7) est capable d'exercer une force de rappel tendant à ramener les deux éléments d'extrémité (3) l'un vers l'autre, et **en ce que** les moyens de maintien (31, 33, 41, 45, 51, 53, 253) et les moyens de fixation (71, 75, 79, 83, 89, 891, 893, 895, 899) sont disposés sur les deux éléments d'extrémité (3).

2. Dispositif de fixation (1) selon la revendication 1, **caractérisé en ce que** les moyens de maintien (31, 33, 41, 45, 51, 53, 253) comprennent au moins une lame élastique (45) présentant une partie bombée capable de s'escamoter dans une perforation traversante 253 de l'élément d'extrémité (3).

3. Dispositif de fixation (1) selon la revendication 1 ou 2, **caractérisé en ce que** chaque élément d'extrémité (3) présente une échancrure (19) ménagée dans une face avant (11) s'ouvrant vers un côté intérieur (13) de celui-ci.

4. Dispositif de fixation (1) selon la revendication 3, **caractérisé en ce que** chaque élément d'extrémité (3) comprend deux lames élastiques (49) arrimée par ses extrémités sur le fond de l'échancrure (19).

5. Dispositif de fixation (1) selon l'une quelconque des revendications 1 à 4, **caractérisé en ce que** l'élément de liaison (5, 7) comprend au moins une sangle (5) ayant une élasticité longitudinale, ancrée par chacune de ses extrémités (23) sur chaque élément d'extrémité (3).

6. Dispositif de fixation (1) selon l'une quelconque des revendications 1 à 4, **caractérisé en ce que** l'élément de liaison (5, 7) comprend un bracelet (7) ayant une portion logée dans une gorge (27) de chaque élément d'extrémité (3), ledit bracelet (7) présentant une élasticité longitudinale.

7. Dispositif de fixation (1) selon l'une quelconque des revendications 1 à 6, **caractérisé en ce que** les moyens de maintien (31, 33, 41, 45, 49, 51, 53, 253) comprennent au moins une paire de rainures (31) ménagées sur chaque élément d'extrémité (3), les deux rainures (31) étant disposées en regard l'une de l'autre, parallèles entre elles dans un même plan, la distance entre les fonds (33) des rainures (31) étant sensiblement égale à la largeur de la plaque spécifique (100).

8. Dispositif de fixation (1) selon la revendication 7, **caractérisé en ce que** chaque élément d'extrémité (3) comprend au moins deux paires de rainures (31), lesdites paires étant ménagées dans des plans parallèles entre eux, les distances entre les fonds (33) de rainures (31) étant différentes d'une paire à l'autre, et sensiblement égales à des largeurs différentes de plaques spécifiques (100).

9. Dispositif de fixation (1) selon la revendication 7 ou 8, **caractérisé en ce que** les moyens de maintien (31, 33, 41, 45, 51, 53, 253) comprennent au moins une lame élastique (41), disposée dans chaque rainure (31), pour appliquer la plaque spécifique (100) contre une paroi interne (37) de ladite rainure (31).

10. Dispositif de fixation (1) selon l'une quelconque des revendications 1 à 9, **caractérisé en ce que** les moyens de maintien (31, 33, 41, 45, 51, 53, 253) comprennent au moins une facette transversale (51, 53) de butée sur chaque élément d'extrémité (3), disposée dans un plan perpendiculaire à la direction de la force de rappel exercée par l'élément de liaison (5, 7).

11. Dispositif de fixation (1) selon l'une quelconque des revendications 1 à 9, **caractérisé en ce que** chaque élément d'extrémité (3) est ouvert vers son côté extérieur (15).

12. Dispositif de fixation (1) selon l'une quelconque des revendications 1 à 10, **caractérisé en ce que** chaque élément d'extrémité (3) est ouvert vers un côté latéral (17), chaque élément d'extrémité (3) présentant une fente (311) à la place d'une rainure (31) , les deux fentes (311) étant disposées du même côté du dispositif de fixation (1).

13. Dispositif de fixation (1) selon l'une quelconque des revendications 1 à 12, **caractérisé en ce que** les moyens de fixation (71, 75, 79, 83, 89, 891, 893, 895, 899) comprennent au moins une paire de crochets (71), chaque crochet (71) étant disposé sur un élément d'extrémité (3), sur la face arrière (9) de celui-ci, les faces intérieures concaves (75) des deux crochets (71) étant disposées en regard l'une de l'autre.

14. Dispositif de fixation (1) selon la revendication 13, **caractérisé en ce que** les moyens de fixation (71, 75, 79, 83, 89, 891, 893, 895, 899) comprennent une face interne concave (75) des crochets (71) de leur base (77) vers leur bord d'attaque (79) et une forme effilée dudit bord d'attaque (79).

15. Dispositif de fixation (1) selon la revendication 13 ou 14, **caractérisé en ce que** le crochet (71) comprend six facettes successives dont l'une est confondue avec la face arrière de l'élément d'extrémité (3), et **en ce qu'**il présente sensiblement les dimensions suivantes :
- distance entre le bord extérieur (711) du crochet (71) et le bord du côté extérieur (15) de l'élément d'extrémité 3 : D = 2,4 mm ;
- épaisseur du crochet : E = 4,2 mm ;
- distance entre la facette (713) du crochet et la butée transversale (51) : F = 5,4 mm ;
- angle formé entre les deux facettes (713, 715) de la face intérieure concave (75) : A = 120 ° ;
- angle de bord d'attaque 79 : B = 35 °.

16. Dispositif de fixation (1) selon l'une quelconque des revendications 13 à 15, **caractérisé en ce que** les moyens de fixation (71, 75, 79, 83, 89, 891, 893, 895, 899) comprennent au moins une encoche (83) s'ouvrant sur le bord d'attaque (79) de chaque crochet (71).

17. Dispositif de fixation (1) selon l'une quelconque des revendications 1 à 13, **caractérisé en ce que** les moyens de fixation (71, 75, 79, 83, 89, 891, 893, 895, 899) comprennent au moins une paire de glissières (891), chaque glissière (891) étant disposée sur un élément d'extrémité (3), sur la face arrière (9) de celui-ci, l'ouverture (897) de chaque glissière étant orientée vers l'arrière de l'élément d'extrémité (3) correspondant et l'entrée de chaque glissière (893) étant orientée vers l'eintérieur dudit élément d'extrémité (3).

18. Dispositif de fixation (1) selon la revendication 17, **caractérisé en ce que** ladite glissière (891) comprend en outre une languette élastique (899) disposée vers le fond de ladite glissière (891) et capable d'un débattement sensiblement perpendiculaire à la direction de coulissement de la glissière (891) dans un plan longitudinal.

19. Dispositif de fixation (1) selon l'une quelconque des revendications 1 à 18, **caractérisé en ce que** les éléments d'extrémité (3) sont réalisés en matière synthétique moulée.

20. Support spécifique (69, 91), destiné à recevoir un dispositif de fixation (1) amovible d'une plaque d'immatriculation (100) sur un véhicule (65) selon l'une quelconque des revendications 1 à 14, **caractérisé en ce qu'**il comprend des moyens de solidarisation (693, 913) pour sa solidarisation avec le véhicule (65), et des moyens complémentaires de fixation (695, 697, 699, 701, 915, 917) qui coopèrent avec des moyens de fixation (71, 75, 79, 83, 89, 891, 893, 895, 899) du dispositif de fixation (1) pour réaliser ladite fixation amovible.

21. Support spécifique (69, 91) selon la revendication 20, **caractérisé en ce qu'**il comprend deux parties de support (691, 911) sur lesquelles sont disposées lesdits moyens de solidarisation (693, 913) et lesdits moyens complémentaires de fixation (695, 697, 699, 701, 915, 917), et des moyens d'espacement (703, 919) pour définir l'espacement entre les deux parties de support (691, 911).

22. Support spécifique (69, 91) selon la revendication 20 ou 21, **caractérisé en ce que** les moyens de solidarisation (693, 913) comprennent au moins une face adhésive (693, 913) support (69, 91).

23. Support spécifique (69) selon l'une quelconque des revendications 20 à 22, **caractérisé en ce que** les moyens complémentaires de fixation (695, 697, 699, 701) comprennent une conformation complémentaire (695) d'un crochet (71) d'un élément d'extrémité (3) du dispositif de fixation (1).

24. Support spécifique (91) selon l'une quelconque des revendications 20 à 23, **caractérisé en ce que** les moyens complémentaires de fixation (915, 917) comprennent une partie de support (911) capable de coulisser dans une glissière (891) d'un élément d'extrémité (3) du dispositif de fixation (1).

25. Support spécifique (69, 91) selon l'une quelconque des revendications 21 à 24, **caractérisé en ce que** les moyens d'espacement (703, 919) comprennent un lien d'espacement (703, 919) non extensible.

26. Support spécifique (69, 91) selon l'une quelconque des revendications 21 à 25, **caractérisé en ce que** les parties de support (691, 911) et les moyens d'espacement (703, 919) sont réalisés en matière synthétique moulée.

27. Ensemble de fixation pour la fixation amovible d'une plaque d'immatriculation spécifique (100) sur un véhicule (65), **caractérisé en ce qu'**il est constitué par un dispositif de fixation (1) selon l'une quelconque des revendications 1 à 14 et par un support spécifique selon l'une quelconque des revendications 20 à 26.

28. Ensemble de fixation selon la revendication 27, **caractérisé en ce que** les moyens d'espacement (919) sont remplacés par la coopération d'un bossage (903) d'une languette élastique (899) d'une glissière (891) d'un l'élément d'extrémité (3) du dispositif (1) et d'un creux (923) d'une partie de support (911) d'une partie de support (911) du support spécifique (91).

29. Ensemble de fixation selon la revendication 27 ou 28, **caractérisé en ce que** la fixation met en oeuvre une force de rappel de l'élément de liaison 5, 7.

30. Ensemble de fixation selon la revendication 27 ou 28, **caractérisé en ce que** la fixation autorise un coulissement de chaque partie de support (911) dans une glissière (891) de l'élément d'extrémité (3) correspondant.

31. Ensemble de fixation selon la revendication 30, **caractérisé en ce que** la longueur des glissières est prévue pour que les parties de support (911) ne puissent pas sortir des glissières (891) en fin de course de coulissement.

32. Procédé de mise en oeuvre d'un dispositif de fixation (1) selon l'une quelconque des revendications 1 à 14 sauf 11, **caractérisé en ce qu'**il comprend les étapes suivantes pour la mise en place d'une plaque spécifique (100) dans le dispositif (1) :
- on écarte les deux éléments d'extrémité (3) l'un de l'autre en résistant à la force de rappel de l'élément de liaison (5, 7),
- on introduit chaque extrémité (110) de la plaque spécifique (100) dans les rainures de guidage (31) en faisant glisser ladite extrémité (110) sur la face de glissement (21) de l'élément d'extrémité (3) correspondant du côté intérieur (13) vers le côté extérieur (15),
- on relâche progressivement la traction exercée sur l'élément de liaison (5, 7) jusqu'à ce que chaque extrémité (110) de la plaque spécifique (100) se trouve stoppée par une butée transversale (51, 53).

33. Procédé de mise en oeuvre d'un dispositif de fixation (1) selon l'une quelconque des revendications 1 à 14, **caractérisé en ce qu'**il comprend les étapes suivantes pour la fixation amovible du dispositif (1) équipé d'une plaque spécifique (100) sur un support spécifique (69, 91) :
- on écarte les deux éléments d'extrémité (3) l'un de l'autre en résistant à la force de rappel de l'élément de liaison (5, 7), jusqu'à atteindre un écartement légèrement supérieur à la distance entre les bords libres du support spécifique (69), mais inférieur à l'écartement nécessaire pour dégager la plaque spécifique (100) du dispositif (1),
- on présente les faces arrières des deux éléments d'extrémité (3) contre les faces libres des deux parties de support (691),
- on engage les bords d'attaque (79) des crochets (71) derrière les bords libres des conformations complémentaires (695) et on relâche progressivement la traction exercée sur l'élément de liaison (5, 7) jusqu'à ce que les faces intérieures concaves (75) desdits crochets (71) soient en contact contre lesdites conformations complémentaires (695) desdites parties de support (691).

34. Procédé de mise en oeuvre d'un dispositif de fixation (1) selon l'une quelconque des revendications 1 à 14, **caractérisé en ce qu'**il comprend les étapes suivantes pour la fixation amovible du dispositif (1) équipé d'une plaque spécifique (100) sur un support spécifique (69, 91) :
- on écarte les deux éléments d'extrémité (3) l'un de l'autre en résistant à la force de rappel de l'élément de liaison (5, 7), jusqu'à atteindre un écartement légèrement supérieur à la distance entre les bords libres du support spécifique (91), mais inférieur à l'écartement nécessaire pour dégager la plaque spécifique (100) du dispositif (1),
- on présente les entrées de glissières (893) face aux parties de support (911), chaque glissière étant à l'extérieur de ladite partie de support (911) suivant la direction longitudinale d'ensemble,
- on relâche progressivement la traction exercée sur l'élément de liaison (5, 7) en introduisant chaque glissière (891) sur la partie de support (911) correspondante jusqu'à ce que la tension dudit élément de liaison disparaisse.

## Claims

1. Fixing device (1) for the releasable fixing of a plate, such as for example a specific registration plate (100) on an existing support (61, 63, 69, 91) on a vehicle (65), such as for example a support plate (61) comprising retaining means (31, 33, 41, 45, 51, 53, 253) for the plate (100) and fixing means (71, 75, 79, 83, 89, 891, 893, 895, 899) for fixing the device (1) onto the support (61, 63, 69, 91), comprising two end elements (3) which each have a rear face (9) disposed opposite said support (61, 63, 69, 91) during use and are connected to each other by a connecting element (5, 7), **characterised in that** the connecting element (5, 7) is able to exert a restoring force tending to bring the two end elements (3) back together and **in that** the retaining means (31, 33, 41, 45, 51, 53, 253) and the fixing means (71, 75, 79, 83, 89, 891, 893, 895, 899) are disposed on the two end elements (3).

2. Fixing device (1) according to claim 1, **characterised in that** the retaining means (31, 33, 41, 45, 51, 53, 253) comprise at least one flexible strip (45) having a cambered part able to retract into a perforation (253) passing through the end element (3).

3. Fixing device (1) according to claim 1 or 2, **characterised in that** each end element (3) has an indentation (19) provided in a front face (11) and opening toward an internal side (13) thereof.

4. Fixing device (1) according to claim 3, **characterised in that** each end element (3) comprises two flexible strips (49), secured by its ends on the base of the indentation (19).

5. Fixing device (1) according to any one of claims 1 to 4, **characterised in that** the connecting element (5, 7) comprises at least one strap (5) having longitudinal elasticity and fixed by each of its ends (23) onto each end element (3).

6. Fixing device (1) according to any one of claims 1 to 4, **characterised in that** the connecting element (5, 7) comprises a band (7) having a portion housed in a channel (27) in each end element (3), said band (7) having longitudinal elasticity.

7. Fixing device (1) according to any one of claims 1 to 6, **characterised in that** the retaining means (31, 33, 41, 45, 49, 51, 53, 253) comprise at least one pair of grooves (31) provided on each end element (3), the two grooves (31) being disposed opposite each other and parallel to each other in the same plane, the distance between the bases (33) of the grooves (31) being substantially equal to the width of the specific plate (100).

8. Fixing device (1) according to claim 7, **characterised in that** each end element (3) comprises at least two pairs of grooves (31), said pairs being provided in mutually parallel planes, the distances between the bases (33) of the grooves (31) being different from one pair to the other and substantially equal to the different widths of specific plates (100).

9. Fixing device (1) according to claim 7 or 8, **characterised in that** the retaining means (31, 33, 41, 45, 51, 53, 253) comprise at least one flexible strip (41) disposed in each groove (31) to place the specific plate (100) against an internal wall (37) of said groove (31).

10. Fixing device (1) according to any one of claims 1 to 9, **characterised in that** the retaining means (31, 33, 41, 45, 51, 53, 253) comprise at least one transverse stop facet (51, 53) on each end element (3) disposed in a plane perpendicular to the direction of the restoring force exerted by the connecting element (5, 7).

11. Fixing device (1) according to any one of claims 1 to 9, **characterised in that** each end element (3) is open toward its external side (15).

12. Fixing device (1) according to any one of claims 1 to 10, **characterised in that** each end element (3) is open toward a lateral side (17), each end element (3) having a slot (311) instead of a groove (31), the two slots (311) being disposed on the same side of the fixing device (1).

13. Fixing device (1) according to any one of claims 1 to 12, **characterised in that** the fixing means (71, 75, 79, 83, 89, 891, 893, 895, 899) comprise at least one pair of hooks (71), each hook (71) being disposed on an end element (3) on the rear face (9) thereof, the concave internal faces (75) of the two hooks (71) being disposed opposite each other.

14. Fixing device (1) according to claim 13, **characterised in that** the fixing means (71, 75, 79, 83, 89, 891, 893, 895, 899) comprise a concave internal face (75) of the hooks (71) from their base (77) toward their leading edge (79) and a tapered shape of said leading edge (79).

15. Fixing device (1) according to claim 13 or 14, **characterised in that** the hook (71) comprises six successive facets of which one is combined with the rear face of the end element (3) and **in that** it has substantially the following dimensions:
- distance between the external edge (711) of the hook (71) and the edge of the external side (15) of the end element (3): D = 2.4 mm;
- thickness of the hook: E = 4.2 mm;
- distance between the facet (713) of the hook and the transverse stop (51): F = 5.4 mm;
- angle formed between the two facets (713, 715) of the concave internal face (75): A = 120°;
- angle of the leading edge (79): B = 35°.

16. Fixing device (1) according to any one of claims 13 to 15, **characterised in that** the fixing means (71, 75, 79, 83, 89, 891, 893, 895, 899) comprise at least one notch (83) opening onto the leading edge (79) of each hook (71).

17. Fixing device (1) according to any one of claims 1 to 13, **characterised in that** the fixing means (71, 75, 79, 83, 89, 891, 893, 895, 899) comprise at least one pair of slideways (891), each slideway (891) being disposed on an end element (3) on the rear face (9) thereof, the opening (897) of each slideway facing toward the rear of the corresponding end element (3) and the entrance to each slideway (893) facing toward the interior of said end element (3).

18. Fixing device (1) according to claim 17, **characterised in that** said slideway (891) further comprises a flexible tongue (899) disposed toward the base of said slideway (891) and able to travel substantially perpendicularly to the sliding direction of the slideway (891) in a longitudinal plane.

19. Fixing device (1) according to any one of claims 1 to 18, **characterised in that** the end elements (3) are made from moulded synthetic material.

20. Specific support (69, 91) intended to receive a releasable fixing device (1) for a registration plate (100) on a vehicle (65) according to any one of claims 1 to 14, **characterised in that** it comprises securing means (693, 913) for securing it to the vehicle (65) and complementary fixing means (695, 697, 699, 701, 915, 917) which work in conjunction with the fixing means (71, 75, 79, 83, 891, 893, 895, 899) of the fixing device (1) to carry out said releasable fixing.

21. Specific support (69, 91) according to claim 20, **characterised in that** it comprises two support parts (691, 911) on which are disposed said securing means (693, 913) and said complementary fixing means (695, 697, 699, 701, 915, 917), and spacing means (703, 919) to define the spacing between the two support parts (691, 911).

22. Specific support (69, 91) according to claim 20 or 21, **characterised in that** the securing means (693, 913) comprise at least one adhesive face (693, 913) of said support (69, 91).

23. Specific support (69) according to any one of claims 20 to 22, **characterised in that** the complementary fixing means (695, 697, 699, 701) comprise a shaping (695) complementary with a hook (71) on an end element (3) of the fixing device (1).

24. Specific support (91) according to any one of claims 20 to 23, **characterised in that** the complementary fixing means (915, 917) comprise a support part (911) able to slide in a slideway (891) of an end element (3) of the fixing device (1).

25. Specific support (69, 91) according to any one of claims 21 to 24, **characterised in that** the spacing means (703, 919) comprise a non-extensible spacing tie (703, 919).

26. Specific support (69, 91) according to any one of claims 21 to 25, **characterised in that** the support parts (691, 911) and the spacing means (703, 919) are made from moulded synthetic material.

27. Fixing unit for the releasable fixing of a specific registration plate (100) on a vehicle (65), **characterised in that** it consists of a fixing device (1) according to any one of claims 1 to 14 and a specific support according to any one of claims 20 to 26.

28. Fixing unit according to claim 27, **characterised in that** the spacing means (919) are replaced by the cooperation of a boss (903) on a flexible tongue (899) of a slideway (891) of an end element (3) of the device (1) and a recess (923) in a support part (911) of a support part (911) of the specific support (91).

29. Fixing unit according to claim 27 or 28, **characterised in that** the fixing employs a restoring force of the connecting element (5, 7).

30. Fixing unit according to claim 27 or 28, **characterised in that** the fixing allows each support part (911) to slide in a slideway (891) of the corresponding end element (3).

31. Fixing unit according to claim 30, **characterised in that** the length of the slideways is designed so that the support parts (911) cannot come out of the slideways (891) at the end of their sliding course.

32. Method for employing a fixing device (1) according to any one of claims 1 to 14 except 11, **characterised in that** it comprises the following stages for positioning a specific plate (100) in the device (1):
- the two end elements (3) are separated from each other by resisting the restoring force of the connecting element (5, 7),
- each end (110) of the specific plate (100) is introduced into the guide grooves (31) by causing said end (110) to slide onto the sliding face (21) of the corresponding end element (3) from the internal side (13) toward to the external side (15),
- the traction exerted on the connecting element (5, 7) is progressively released until each end (110) of the specific plate (100) is stopped by a transverse stop (51, 53).

33. Method for employing a fixing device (1) according to any one of claims 1 to 14, **characterised in that** it comprises the following stages for the releasable fixing of the device (1) equipped with a specific plate (100) on a specific support (69, 91):
- the two end elements (3) are separated from each other by resisting the restoring force of the connecting element (5, 7), until a separation is achieved which is slightly greater than the distance between the free edges of the specific support (69) but smaller than the separation necessary to release the specific plate (100) from the device (1),
- the rear faces of the two end elements (3) are positioned against the free faces of the two support parts (691),
- the leading edges (79) of the hooks (71) are engaged behind the free edges of the complementary shapings (695) and the traction exerted on the connecting element (5, 7) is progressively released until the concave internal faces (75) of said hooks (71) come into contact with said complementary shapings (695) of said support parts (691).

34. Method of employing a fixing device (1) according to any one of claims 1 to 14, **characterised in that** it comprises the following stages for the releasable fixing of the device (1), equipped with a specific plate (100) on a specific support (69, 91):
- the two end elements (3) are separated from each other by resisting the restoring force of the connecting element (5, 7) until a separation is achieved which is slightly greater than the distance between the free edges of the specific support (91) but smaller than the separation necessary to release the specific plate (100) from the device (1),
- the entrances to the slideways (893) are positioned opposite the support parts (911), each slideway being on the exterior of said support part (911), in the longitudinal direction of the unit,
- the traction exerted on the connecting element (5, 7) is progressively released by introducing each slideway (891) onto the corresponding support part (911) until the tension of said connecting element disappears.

## Patentansprüche

1. Befestigungsvorrichtung (1) zum lösbaren Befestigen einer Platte, wie beispielsweise einem spezifischen Nummernschild (100) auf einer Halterung (61, 63, 69, 91), die an einem Fahrzeug (65) vorhanden ist, wie beispielsweise einer Schildhalterung (61), mit Halteeinrichtungen (31, 33, 41, 45, 51, 53, 253) für das Schild (100) und Befestigungseinrichtungen (71, 75, 79, 83, 89, 891, 893, 895, 899) für die Vorrichtung (1) auf der Halterung (61, 63, 69, 91), wobei die Vorrichtung zwei Endteile (3) umfasst, wovon jedes eine Rückseite (9) aufweist, die beim Gebrauch der Halterung (61, 63, 69, 91) gegenüberliegend angeordnet ist, und die Endteile durch ein Verbindungsteil (5, 7) untereinander verbunden sind, **dadurch gekennzeichnet, dass** das Verbindungsteil (5, 7) in der Lage ist, eine Rückstellkraft auszuüben, die darauf abzielt, die beiden Endteile (3) zueinander zurückzubringen, und dass die Halteeinrichtungen (31, 33, 41, 45, 51, 53, 253) und die Befestigungseinrichtungen (71, 75, 79, 83, 89, 891, 893, 895, 899) auf den beiden Endteilen (3) angeordnet sind..

2. Befestigungsvorrichtung (1) nach Anspruch 1, **dadurch gekennzeichnet, dass** die Halteeinrichtungen (31, 33, 41, 45, 51, 53, 253) mindestens einen elastischen Streifen (45) umfassen, der einen gewölbten Abschnitt aufweist, der in einer durchgehenden Durchbohrung (253) des Endteils (3) versenkt werden kann.

3. Befestigungsvorrichtung (1) nach Anspruch 1 oder 2, **dadurch gekennzeichnet, dass** jedes Endteil (3) einen bogenförmigen Ausschnitt (19) aufweist, der in einer Vorderfläche (11) gebildet ist, die sich zu einer Innenseite (13) des Endteils hin öffnet.

4. Befestigungsvorrichtung (1) nach Anspruch 3, **dadurch gekennzeichnet, dass** jedes Endteil (3) zwei elastische Streifen (49) umfasst, die mit ihren Enden am Boden des bogenförmigen Ausschnitts (19) untergebracht sind.

5. Befestigungsvorrichtung (1) nach einem der Ansprüche 1 bis 4, **dadurch gekennzeichnet, dass** das Verbindungsteil (5, 7) mindestens einen eine Längselastizität aufweisenden Gurt (5) umfasst, der mit seinen Enden (23) jeweils an einem Endteil (3) verankert ist.

6. Befestigungsvorrichtung (1) nach einem der Ansprüche 1 bis 4, **dadurch gekennzeichnet, dass** das Verbindungsteil (5, 7) ein Band (7) mit einem in einer Auskehlung (27) jedes Endteils (3) untergebrachten Abschnitt umfasst, wobei das Band (7) eine Längselastizität aufweist.

7. Befestigungsvorrichtung (1) nach einem der Ansprüche 1 bis 6, **dadurch gekennzeichnet, dass** die Halteeinrichtungen (31, 33, 41, 45, 49, 51, 53, 253) mindestens ein Paar Nuten (31) umfassen, die an jedem Endteil (3) gebildet sind, wobei die beiden Nuten (31) einander gegenüberliegend, in derselben Ebene zueinander parallel angeordnet sind, wobei der Abstand zwischen den Böden (33) der Nuten (31) im wesentlichen gleich der Breite des spezifischen Schildes (100) ist.

8. Befestigungsvorrichtung (1) nach Anspruch 7, **dadurch gekennzeichnet, dass** jedes Endteil (3) mindestens zwei Paare Nuten (31) umfasst, wobei die Paare in zueinander parallelen Ebenen gebildet sind, wobei die Abstände zwischen den Böden (33) der Nuten (31) von einem Paar zum nächsten unterschiedlich und im wesentlichen gleich den unterschiedlichen Breiten von spezifischen Schildern (100) sind.

9. Befestigungsvorrichtung (1) nach Anspruch 7 oder 8, **dadurch gekennzeichnet, dass** die Halteeinrichtungen (31, 33, 41, 45, 51, 53, 253) mindestens einen elastischen Streifen (41) umfassen, der in jeder Nut (31) angeordnet ist, um das spezifische Schild (100) an einer Innenwandung (37) der Nut (31) in Anlage zu bringen.

10. Befestigungsvorrichtung (1) nach einem der Ansprüche 1 bis 9, **dadurch gekennzeichnet, dass** die Halteeinrichtungen (31, 33, 41, 45, 51, 53, 253) mindestens eine querverlaufende Anschlagsfläche (51, 53) an jedem Endteil (3) umfassen, die in einer Ebene senkrecht zu der Rückstellkraft angeordnet ist, die vom Verbindungsteil (5, 7) ausgeübt wird.

11. Befestigungsvorrichtung (1) nach einem der Ansprüche 1 bis 9, **dadurch gekennzeichnet, dass** jedes Endteil (3) zu seiner Außenseite (15) hin offen ist.

12. Befestigungsvorrichtung (1) nach einem der Ansprüche 1 bis 10, **dadurch gekennzeichnet, dass** jedes Endteil (3) zu einer lateralen Seite (17) hin offen ist, wobei jedes Endteil (3) anstelle einer Nut (31) einen Schlitz (311) aufweist, wobei die beiden Schlitze (311) auf derselben Seite der Befestigungsvorrichtung (1) angeordnet sind.

13. Befestigungsvorrichtung (1) nach einem der Ansprüche 1 bis 12, **dadurch gekennzeichnet, dass** die Befestigungseinrichtungen (71, 75, 79, 83, 89, 891, 893, 895, 899) mindestens ein Paar Greifer (71) umfassen, wobei jeder Greifer (71) an einem Endteil (3) an dessen Rückseite (9) angeordnet ist, wobei die konkaven Innenflächen (75) der beiden Greifer (71) einander gegenüberliegend angeordnet sind.

14. Befestigungsvorrichtung (1) nach Anspruch 13, **dadurch gekennzeichnet, dass** die Befestigungseinrichtungen (71, 75, 79, 83, 89, 891, 893, 895, 899) eine Innenfläche (75), die zu den Greifern (71) ihrer Basis (77) zum Angriffsrand (79) hin konkav ist, und eine sich verjüngende Form des Angriffsrandes (79) umfassen.

15. Befestigungsvorrichtung (1) nach Anspruch 13 oder 14, **dadurch gekennzeichnet, dass** der Greifer (71) sechs aufeinanderfolgende Flächen umfasst, wovon eine mit der Rückseite des Endteils (3) verbunden ist, und dass er im wesentlichen die folgenden Abmessungen aufweist:
- Abstand zwischen dem Außenrand (711) des Greifers (71) und dem Rand der Außenseite (15) des Endteils (3): D = 2,4 mm;
- Dicke des Greifers: E = 4,2 mm;
- Abstand zwischen der Fläche (713) des Greifers und dem Queranschlag (51): F = 5,4 mm;
- Winkel zwischen den beiden Flächen (713, 715) der konkaven Innenfläche (75): A = 120°;
- Winkel des Angriffsrandes (79): B = 35°.

16. Befestigungsvorrichtung (1) nach einem der Ansprüche 1 bis 12, **dadurch gekennzeichnet, dass** die Befestigungseinrichtungen (71, 75, 79, 83, 89, 891, 893, 895, 899) mindestens eine Vertiefung (83) umfassen, die sich zum Angriffsrand (79) jedes Greifers (71) hin öffnet.

17. Befestigungsvorrichtung (1) nach einem der Ansprüche 1 bis 13, **dadurch gekennzeichnet, dass** die Befestigungseinrichtungen (71, 75, 79, 83, 89, 891, 893, 895, 899) mindestens ein Paar Gleitführungen (891) umfassen, wobei jede Gleitführung (891) an einem Endteil (3) an dessen Rückseite (9) angeordnet ist, wobei die Öffnung (897) jeder Gleitführung zur Rückseite des entsprechenden Endteils (3) hin gerichtet ist, und der Eingang jeder Gleitführung (893) zum Inneren des Endteils (3) hin gerichtet ist.

18. Befestigungsvorrichtung (1) nach Anspruch 17, **dadurch gekennzeichnet, dass** die Gleitführung (891) darüber hinaus eine elastische Lasche (899) umfasst, die zum Boden der Gleitführung (891) hin angeordnet und zu einer Verschiebung fähig ist, die im wesentlichen senkrecht zur Richtung des Gleitwegs der Gleitführung (891) in einer Längsebene ist.

19. Befestigungsvorrichtung (1) nach einem der Ansprüche 1 bis 18, **dadurch gekennzeichnet, dass** die Endteile (3) aus einem geformten Kunststoff hergestellt sind.

20. Spezifische Halterung (69, 91) nach einem der Ansprüche 1 bis 14, die dazu bestimmt ist, eine lösbare Befestigungsvorrichtung (1) für ein Nummernschild (100) an einem Fahrzeug (65) aufzunehmen, **dadurch gekennzeichnet, dass** sie Einrichtungen (693, 913) zu ihrer festen Verbindung mit dem Fahrzeug (65) und komplementäre Befestigungseinrichtungen (695, 697, 699, 701, 915, 917) umfasst, die mit den Befestigungseinrichtungen (71, 75, 79, 83, 89, 891, 893, 895, 899) der Befestigungsvorrichtung (1) zusammenwirken, um die lösbare Befestigung zu realisieren.

21. Spezifische Halterung (69, 91) nach Anspruch 20, **dadurch gekennzeichnet, dass** sie zwei Tragteile (691, 911), an denen die Einrichtungen (693, 913) zur festen Verbindung und die komplementären Befestigungseinrichtungen (695, 697, 699, 701, 915, 917) angeordnet sind, und Abstandseinrichtungen (703, 919) umfasst, um den Zwischenraum zwischen den beiden Tragteilen (691, 911) auszubilden.

22. Spezifische Halterung (69, 91) nach Anspruch 20 oder 21, **dadurch gekennzeichnet, dass** die Einrichtungen (693, 913) zur festen Verbindung mindestens eine Haftfläche (693, 913) für die Halterung (69, 91) umfassen.

23. Spezifische Halterung (69) nach einem der Ansprüche 20 bis 22, **dadurch gekennzeichnet, dass** die komplementären Befestigungseinrichtungen (695, 697, 699, 701) eine komplementäre Konfiguration (695) für einen Greifer (71) eines Endteils (3) der Befestigungsvorrichtung (1) umfassen.

24. Spezifische Halterung (91) nach einem der Ansprüche 20 bis 23, **dadurch gekennzeichnet, dass** die komplementären Befestigungseinrichtungen (915, 917) ein Tragteil (911) umfassen, das in der Lage ist, sich in einer Gleitführung (891) eines Endteils (3) der Befestigungsvorrichtung (1) zu verschieben.

25. Spezifische Halterung (69, 91) nach einem der Ansprüche 21 bis 24, **dadurch gekennzeichnet, dass** die Abstandseinrichtungen (703, 919) ein nicht dehnbares Abstandsverbindungsband (703, 919) umfassen.

26. Spezifische Halterung (69, 91) nach einem der Ansprüche 21 bis 25, **dadurch gekennzeichnet, dass** die Tragteile (691, 911) und die Abstandeinrichtungen (703, 919) aus geformtem Kunststoff hergestellt sind.

27. Befestigungseinheit zur lösbaren Befestigung eines spezifischen Nummernschildes (100) an einem Fahrzeug (65), **dadurch gekennzeichnet, dass** sie aus einer Befestigungsvorrichtung (1) nach einem der Ansprüche 1 bis 14 und einer spezifischen Halterung nach einem der Ansprüche 20 bis 26 besteht.

28. Befestigungseinheit nach Anspruch 27, **dadurch gekennzeichnet, dass** die Abstandseinrichtungen (919) durch das Zusammenwirken eines Vorsprungs (903) einer elastischen Lasche (899) einer Gleitführung (891) eines Endteils (3) der Vorrichtung (1) mit einer Vertiefung (923) eines Tragteils (911) der spezifischen Halterung (91) ersetzt sind.

29. Befestigungseinheit nach Anspruch 27 oder 28, **dadurch gekennzeichnet, dass** die Befestigung eine Rückstellkraft für das Verbindungsteil (5, 7) erzeugt.

30. Befestigungseinheit nach Anspruch 27 oder 28, **dadurch gekennzeichnet, dass** die Befestigung eine Verschiebung jedes Tragteils (911) in einer Gleitführung (891) des entsprechenden Endteils (3) zulässt.

31. Befestigungseinheit nach Anspruch 30, **dadurch gekennzeichnet, dass** die Länge der Gleitführungen so ausgelegt ist, dass die Tragteile (911) am Ende des Verschiebungswegs nicht aus den Gleitführungen (891) heraustreten können.

32. Verfahren zum praktischen Einsatz einer Befestigungsvorrichtung (1) nach einem der Ansprüche 1 bis 14, mit Ausnahme von 11, **dadurch gekennzeichnet, dass** es zur Anbringung eines spezifischen Schildes (100) in der Vorrichtung (1) die folgenden Schritte umfasst:
- die beiden Endteile (3) werden entgegen der Rückstellkraft des Verbindungsteils (5, 7) auseinandergespreizt,
- jedes Ende (110) des spezifischen Schildes (100) wird in die Führungsnuten (31) eingeführt, indem man das Ende (110) auf der Gleitfläche (21) des entsprechenden Endteils (3) von der Innenseite (13) zur Außenseite (15) gleiten lässt,
- nach und nach wird der auf das Verbindungsteil (5, 7) ausgeübte Zug nachgelassen, bis jedes Ende (110) des spezifischen Schildes (100) von einem Queranschlag (51, 53) angehalten wird.

33. Verfahren zum praktischen Einsatz einer Befestigungsvorrichtung (1) nach einem der Ansprüche 1 bis 14, **dadurch gekennzeichnet, dass** es zur lösbaren Befestigung der mit einem spezifischen Schild (100) auf einer spezifischen Halterung (69, 91) ausgestatteten Befestigungsvorrichtung (1) die folgenden Schritte umfasst:
- die beiden Endteile (3) werden entgegen der Rückstellkraft des Verbindungsteils (5, 7) auseinandergespreizt, bis ein Zwischenraum erzielt wird, der etwas größer als der Abstand zwischen den freien Rändern der spezifischen Halterung (69) aber kleiner als der Zwischenraum ist, der nötig ist, um das spezifische Schild (100) von der Vorrichtung (1) zu lösen,
- die Rückseiten der beiden Endteile (3) werden an die freien Flächen der beiden Tragteile (691) angelegt,
- die Angriffsränder (79) der Greifer (71) werden hinter den freien Rändern der komplementären Konfigurationen (695) in Eingriff gebracht und der auf das Verbindungsteil (5, 7) ausgeübte Zug wird nach und nach nachgelassen, bis die konkaven Innenflächen (75) der Greifer (71) an den komplementären Konfigurationen (695) der Tragteile (691) in Berührung sind.

34. Verfahren zum praktischen Einsatz einer Befestigungsvorrichtung (1) nach einem der Ansprüche 1 bis 14, **dadurch gekennzeichnet, dass** es zur lösbaren Befestigung der mit einem spezifischen Schild (100) auf einer spezifischen Halterung (69, 91) ausgestatteten Befestigungsvorrichtung (1) die folgenden Schritte umfasst:
- die beiden Endteile (3) werden entgegen der Rückstellkraft des Verbindungsteils (5, 7) auseinandergespreizt, bis ein Zwischenraum erzielt wird, der etwas größer als der Abstand zwischen den freien Rändern der spezifischen Halterung (91) aber kleiner als der Zwischenraum ist, der nötig ist, um das spezifische Schild (100) von der Vorrichtung (1) zu lösen,
- die Eingänge der Gleitfiihrungen (893) werden den Tragteilen (911) zugewandt, wobei sich jede Gleitführung außerhalb des Tragteils (911) entlang der Längsrichtung der Einheit befindet,
- der auf das Verbindungsteil (5, 7) ausgeübte Zug wird nach und nach nachgelassen, indem jede Gleitführung (891) am entsprechenden Tragteil (911) eingeführt wird, bis die Spannung des Verbindungsteils nachgelassen hat.
